# EUROPEAN PATENT SPECIFICATION

(11) **EP 0 294 218 B1**
(45) Date of publication and mention of the grant of the patent: **02.02.1994**
(21) Application number: 88305085.8
(22) Date of filing: 03.06.1988
(51) Int. Cl.: G02B 5/08, B29D 11/00

(54) **Manufacturing process for polygonal mirror**
Herstellungsverfahren für Polygonspiegel
Procédé de fabrication pour des miroirs polygonaux

(30) Priority: 04.06.1987 JP 141201/87
(43) Date of publication of application: 07.12.1988
(73) Proprietor: KONICA CORPORATION, Tokyo 160 (JP)
(72) Inventor: Murakoshi, Kazuhiko, Hachioji-shi Tokyo (JP); Shimura, Toshio, Hachioji-shi Tokyo (JP)
(74) Representative: Wood, Anthony Charles

(56) References cited:
- EP-A- 0 249 219
- US-A- 4 259 370
- PATENT ABSTRACTS OF JAPAN, vol. 6, no. 104 (P-122)(982), 15 June 1982 ; & JP-A-57037324
- PATENT ABSTRACTS OF JAPAN, vol. 8, no. 89, (P-270)(1526), 24 April 1984 ; & JP-A-59003401
- PATENT ABSTRACTS OF JAPAN, vol. 5, no. 182 (P-90)(854), 20 November 1981 ; & JP-A-56110904
- "Elements of Materials Science and Engineering", L.H. van Vlack, Addison-Wesley Publ., 5th Ed., 1985, pp 235-236

## Description

### BACKGROUND OF THE INVENTION

The present invention relates to a rotatable polygonal mirror used in an optical apparatus or the like having a laser scanning system, and to a manufacturing process thereof.

A polygonal mirror is usually a mirror that comprises a prism, for example, of a regular octahedral cross-section and the side faces thereof serve as reflective mirror faces, wherein the mirror serves the purposes such as deflecting a laser beam to scan the surface that receives the beam.

Conventionally, aluminum alloy or optical glass has been used as a material of such a rotatable polygon mirror. After being formed into a regular octahedral shape through a milling or grinding process, aluminum alloy is processed by a sintered carbide tool and optical glass is polished thereby reflective mirror faces are formed.

Polishing of glass requires a large number of processes to achieve the desired smoothness. Therefore, the cost is several times as high as that of metal milling. When metal is used, the material cost and the milling process cost are high. Metal is far from being comparable to molded mirror, with disadvantages such as scattering during optical scanning due to the curved surface made by cutting tools and cavities found in the aluminum material, lover operation efficiency caused by difficulties in processing, and the number of process steps required.

Since rotatable polygonal mirrors made of metal or glass are heavy, a complicated and expensive drive system and control system are required to realize high speed rotation. In addition, a tremendous amount of labor and time is necessary in the above-mentioned manufacturing process to obtain a highly precise rotatable polygonal mirror, which results in high manufacturing cost.

A synthetic resin has also been tried to form a rotatable polygonal mirror. Even if a synthetic resin is used, however, a defect such as sink or shrinked mark occurs when a mirror exceeds a certain thickness. If thinned portions are provided, ribs are necessary to increase mechanical strength. Then the mirror section will be deformed by centrifugal force at the time of high speed rotation. If injection molding of such a resin is adopted, it is difficult to maintain uniform molding pressure because of the complex shape of a rotatable polygonal mirror. As a result, internal stress causes warpage and sinking which makes it almost impossible to obtain reflective mirror faces with sufficient mechanical strength and high flatness.

Objects of the invention are to provide a method of manufacturing a rotatable polygonal mirror free from the above problems normally occuring in injection molding processes; to manufacture such a rotatable polygonal mirror at low cost, and to manufacture such a rotatable polygonal mirror of synthetic resin having sufficient mechanical strength and high flatness.

US-A-4259370 describes a method of manufacturing a polygonal mirror, comprising:
injection molding a polygonal body by feeding a resin into a mold through inlet means; and
forming a mirror surface (11) on each of the side faces of the peripheral surface of the molded polygonal body. A similar method is described in Patent Abstracts of Japan Vol. 6, No. 104, (P-122)[982], JP-A-5737324.

The present invention is characterized in that:
said resin is fed into said mold through a said inlet means comprising an inlet branching into a plurality of pin point gates equal in number to the number of said side faces of the polygon, each of said pin point gates being associated with one of said side faces; and
said resin feed is distributed by said pin point gates to flow into said mold at points corresponding similarly with the respective centres of the lengths of said side faces, causing each said flow to meet its adjacent two flows along boundary lines passing through the junctions between the associated side face and its two adjacent said side faces.

Attention is drawn to our co-pending application no. 88305086.6 (EP-A-0294219) which discloses a certain structure of rotatable polygonal mirror.

Embodiments of the invention will now be described, by way of example, with reference to the accompanying drawings, in which:
Figs. 1 and 7A are plan views of a rotatable polygonal mirror manufactured by a method according to this invention.
Figs. 2 to 6, 7B, and 8 to 11 show principal sections of the rotatable polygonal mirror.

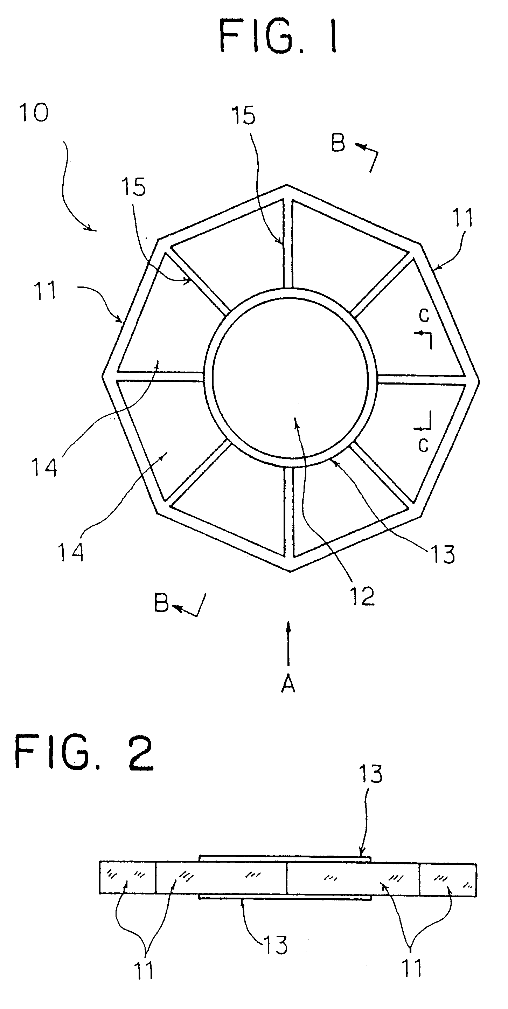

Fig. 1 shows a rotatable polygonal mirror 10 produced by a mold according to a manufacturing method of this invention, viewed from the axial direction of the rotatable axis. Figs. 2, 3 and 4 are viewed from the arrow marks A, BB, and CC respectively.

A rotatable polygonal mirror is a regular octahedral member having eight faces on its peripheral surface. It is a molded member, made of thermoplastic resin, formed in one body by connecting a boss 13 which surrounds a center hole 12 and each face with plate section 14 which form a ring by injection molding.

As a resin material for the rotatable polygonal mirror 10, a polycarbonate is preferably used because it has superior mechanical strength and removable capability after molding which ensure a high grade finished surface. After molding, aluminum is evaporated on each face of the polygon to form eight mirror sections 11 as shown in Fig. 2. A protecting coating of SiO₂ is further formed on each surface of mirror sections 11.

A rotary shaft not shown in the figure is engaged into the hole 12 of the rotatable polygonal mirror and attached to the inner surface of the boss 13. Thus, the rotatable polygonal mirror is driven in unison with the rotary shaft. The direction of a laser beam irradiated on each mirror section is changed to scan the surface that receives the beam.

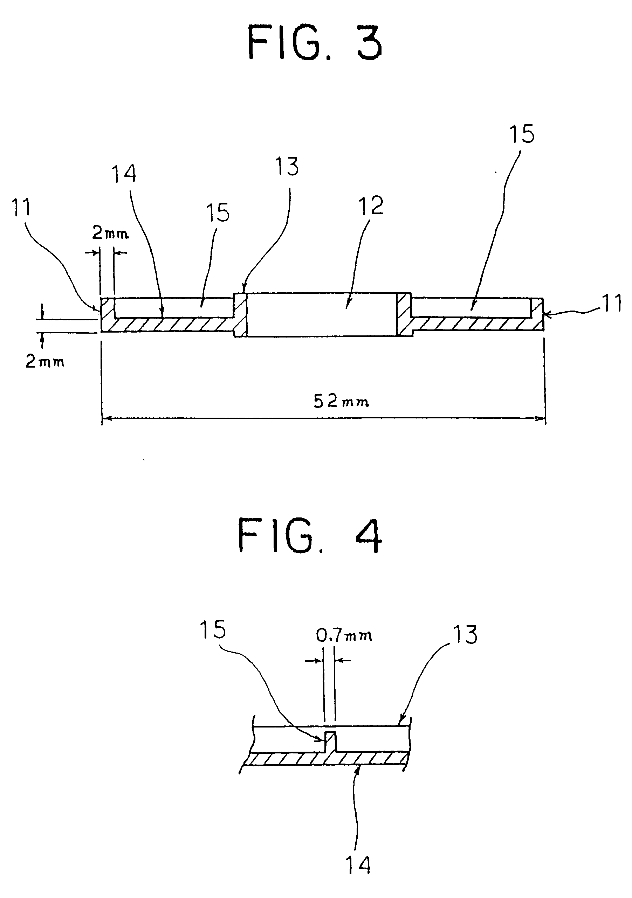

The mirror section 11 is finished to have a high flatness of 0.02µ m or less and is required to have a mechanical strength which ensures optical flatness to withstand high speed rotation of 8000 rotations per minute or more. To reinforce the structure of the mirror section 11, each mirror section 11 and the boss 13 are connected by eight ribs 15 which are radially positioned between them and vertically projected from the plate section 14 as shown in Figs. 3 and 4.

As one example of principal dimension of polygonal mirror 10, in the case that a length of side to side between the mirror section 11 is approx. 52 mm, the thicknesses of the mirror section 11 and the plate section 14 are preferably approx. 2 mm respectively, based on the accuracy of the finished surface after molding. When the thickness of the rib 15 was 0.7 mm in above embodiment, considering structural strength, molding was satisfactorily made while sufficiently maintaining the fluidity of the resin material. It may be possible to increase the thickness of the rib 15 within the range where no sink will occur.

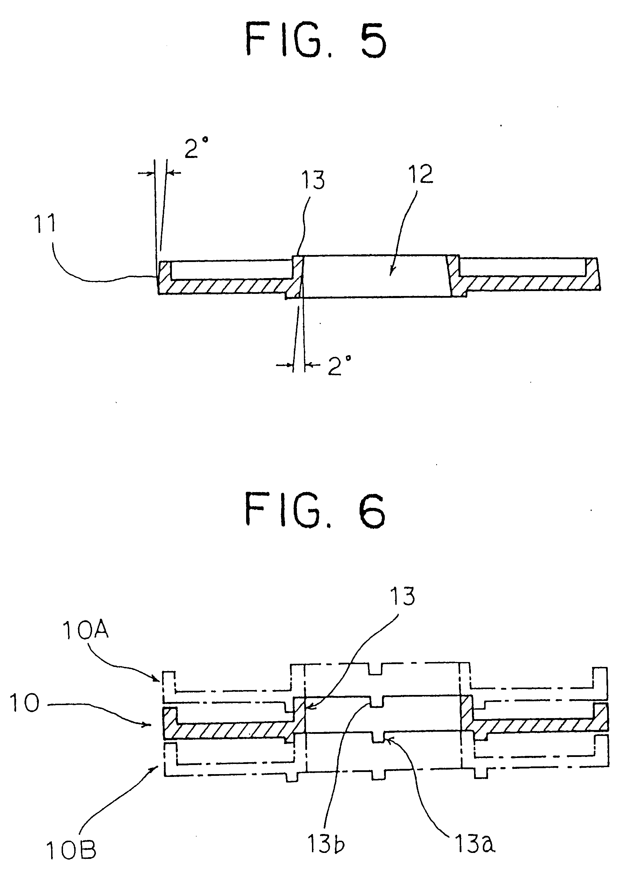

A slant of approx. 2° is provided in the same direction on the face of the mirror section 11 and the inner diameter section of the boss 13 as shown in Fig. 5 so as to facilitate the removal from the mold after injection molding is completed. Thus, removal from the mold is accomplished while keeping highly accurate flatness and dimensions without scratching the face of the mirror section 11 and the inner surface of the boss 13.

A step is provided on the inner peripheral surface of the boss 13 of the rotatable polygonal mirror 10 as shown in Fig. 6. The outer peripheral section of another boss 13 can be fitted on this step. Thus, rotatable polygonal mirrors 10A and 10B can be piled as shown by the broken lines in the figure. As a result, evaporation and other surface treatment processes can be performed efficiently. It is also possible to pile up a large number of mirrors in this way for the purpose of space-saving storage.

As shown in the figure, a convex portion 13a is provided on one side of the boss 13 and a concave portion 13b on the other side to fit the above convex portion 13a. When rotatable polygonal mirrors are piled up, the positioning of the mirror can be easily made by fitting the convex portion 13a and the concave portion 13b.

In the injection molding of such a rotatable polygonal mirror 10, the finished surface, and especially the flatness and strength of the mirror section 11 are strongly influenced by the number and location of the gates on a mold. Each mirror section 11 of this invention is provided with one pin point gate. In this way, resin pressure applied on the mirror section 11 during injection molding is made uniform. Moreover, the weld line is adjusted to be along the joint line between mirror sections 11 which does not serve a reflection purpose. Thus, a rotatable polygonal mirror 11 having extremely high flatness and excellent mechanical strength and the manufacturing method thereof can be achieved.

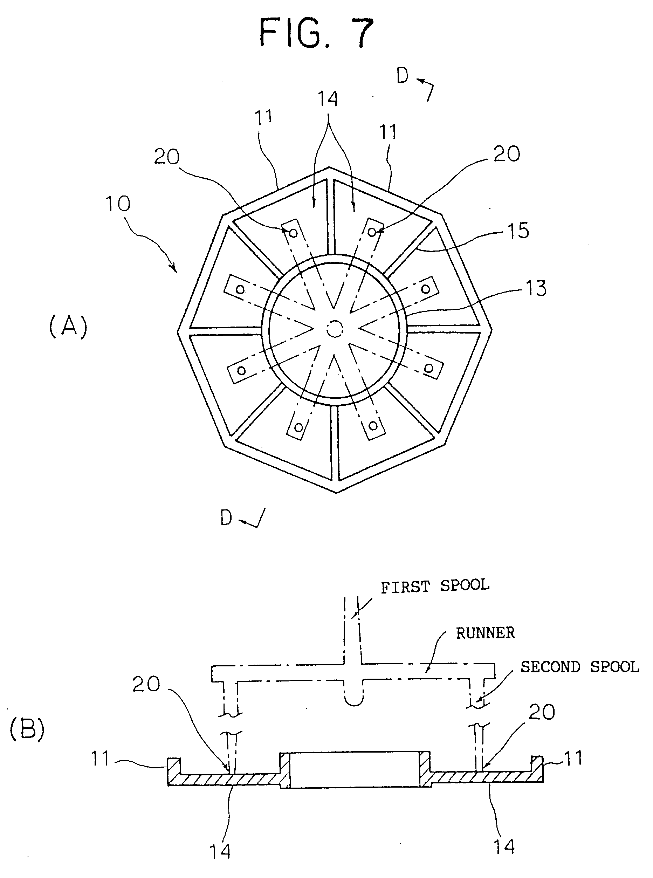

Fig. 7 (A) shows an arrangement of pin point gates 20 in a mold for the rotatable polygonal mirror 10. Fig. 7(B) shows a view from the arrow DD. Eight lines of the second spool for introducing resin are branched off radially from the first spool and are connected to eight pieces of pin point gates 20. Each of pin point gates 20 is located on plate section 14 at the bisector being at right angles to the respective reflective mirror face of mirror section 11.

The balance of the amount and pressure of the resin injected from each pin point gate is adjusted to be uniform. All the faces of the mirror sections 11 are located equally from each pin point gate 20. In this way, the flow of resin can be kept uniform and the mirror section 11 having a high smoothness and flatness can be obtained.

Since each mirror section receives an injected resin from each corresponding pin point gate 20, the weld line which is formed between the adjacent mirror sections 11 occurs on the joint of each mirror section 11. Therefore, the flatness of each mirror face is free from the influence of such a weld line, which further enhances the flatness of each mirror face.

This invention is not limited to the above mentioned mirror section 11 of the rotatable polygonal mirror 10 having an excellent flatness. For example, a reflective surface with optical characteristics described in Japanese Patent Publication JP-A-61-156020 can also be considered for the purposes of the present invention.

This invention made it possible to provide a light weight rotatable polygonal mirror made of synthetic resin having high flatness and mechanical strength without applying a large load to the drive and control systems.

In the rotatable polygonal mirror 10, a resin is injected from eight pin point gates which are radially branched as shown in Fig. 7 and pressurized onto each mirror section 11 via each plate section. Therefore, the distance from the pin point gate 20 to the mirror surface 11 varies according to the part of each mirror section. This results in uneven molding pressure of resin which is applied on the surface of the mirror 11 and may cause warp or deformation after molding. Consequently, there may be a possibility of decreased flatness.

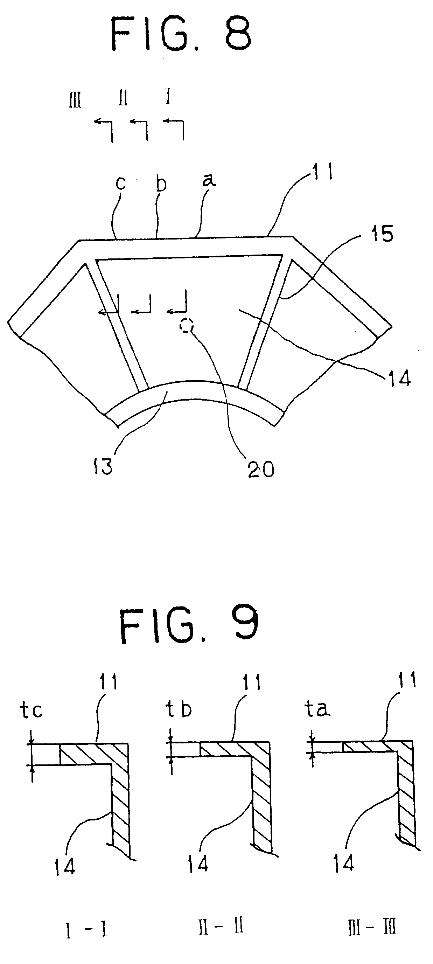

In the rotatable polygonal mirror 10, the thickness of the mirror section 11 can be varied as shown in Fig. 8 according to the part of the mirror section 11 so as to achieve uniform molding pressure of resin on any part of the mirror section 11.

As shown in Fig. 9, the cross sections of the central part (a) of the mirror section 11, the middle part (b), and the end part (c) do not have equal thickness. The thickness (tc) at the end part (c) is the largest and the thickness (ta) at the central part (a) is the smallest. Thus, the thickness gradually decreases toward the center in a symmetrical pattern.

Accordingly, the inner back surface of the mirror section 11 forms a continuous arc as shown in Fig. 8, which makes it possible to control a flow rate of a resin to realize uniform molding pressure on any part of the mirror section.

The difference in thickness of the mirror section 11 produces remarkable effect even if such a difference is extremely small. Therefore, it has been confirmed that decreasing the central thickness to a range of 1.5 to 1.8 mm for the mirror section of 2 mm thick eliminates residual stress and results in a rotatable polygonal mirror without warpage or deformation.

In the rotatable polygonal mirror 10, a resin is injected from eight pin point gates 20 which are radially branched as shown in Fig. 7 to individually form each mirror section 11 and each plate area. As a result, the weld line is formed along the rib 15.

Each boundary section (a) of the mirror section may be locally thickened when the ribs are connected. Vacuum foams tend to occur inside of such a boundary section (a), which decreases mechanical strength. Moreover, the flatness is sometimes decreased by a sink generated on the mirror surface.

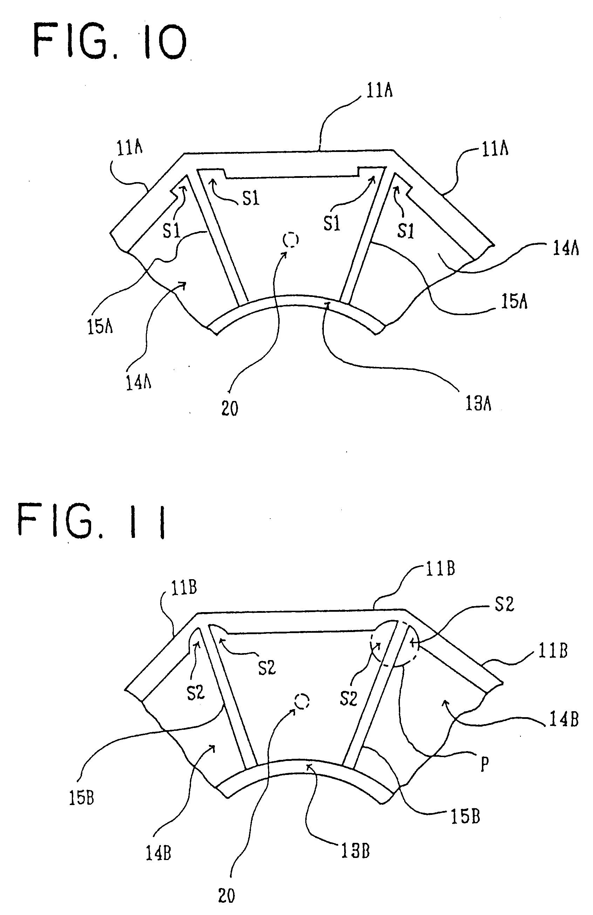

In the rotatable polygonal mirror 10, as shown in Figs. 10 and 11, thinning portions S1 and S2 are provided on each inner part of the boundary sections of the mirror section 11. These portions serve to make pressure of the resin injected into the mirror section 11 and cooling speed after molding uniform over the entire area to prevent cavities and sinks from occurring.

Fig. 10 shows an example of a thinning portion S1 which is provided to linearly lessen the thickness of the mirror section 11A at both ends in a prescribed range. Fig. 11 shows an example of a thinning portion S2 which is provided to lessen the thickness along the rib 15B. In the latter case, especially, a cylindrical member P shown in a broken line can be used, which adds an advantage of simplified mold manufacturing.

As clearly shown in the figures, the thinning portions S1 and S2 are provided in a manner that they do not give any influence on each plate area 14A and 14B and each rib 15A and 15B.

It is preferable to determine the shape and size of the thinning portions S1 and S2 after making experiments while taking the shape, volume, resin material, and molding conditions of the frame which comprise the mirror section 11 into consideration.

## Claims

1. A method of manufacturing a polygonal mirror, comprising:
injection molding a polygonal body (13,14,15) by feeding a resin into a mold through inlet means (20); and
forming a mirror surface (11) on each of the side faces of the peripheral surface of the molded polygonal body;
characterized in that:
said resin is fed into said mold through a said inlet means comprising an inlet branching into a plurality of pin point gates (20) equal in number to the number of said side faces of the polygon, each of said pin point gates being associated with one of said side faces; and
said resin feed is distributed by said pin point gates (20) to flow into said mold at points corresponding similarly with the respective centres of the lengths of said side faces,
causing each said flow to meet its adjacent two flows along boundary lines passing through the junctions between the associated side face and its two adjacent said side faces.

2. A method according to claim 1 characterized in that said step of forming a mirror surface (11) comprises coating said side faces with metal.

3. A method according to claim 2 characterized in that said step of forming a mirror surface further comprises forming a protective layer over said metal coating.

4. A method according to any one of claims 1 to 3 characterized in that said step of feeding the resin into the mold comprises injection of said resin under pressure through said inlet means.

5. A method according to any one of claims 1 to 4 characterized in that said polygonal body (13,14,15) is an octagonal body.

## Patentansprüche

1. Verfahren zur Herstellung eines Polygonspiegels, das folgendes umfaßt:
Spritzgießen eines Polygonkörpers (13, 14, 15), indem einer Form durch eine Einlaßvorrichtung (20) ein Harz zugeführt wird, und
Bilden einer Spiegelfläche (11) auf jeder der Seitenflächen der Umfangsfläche des geformten Polygonkörpers,
dadurch gekennzeichnet, daß
der Form das Harz durch die Einlaßvorrichtung zugeführt wird, die einen Einlaß umfaßt, der sich in mehrere Nadelpunktangüsse (20) verzweigt, deren Anzahl gleich der Anzahl der Seitenflächen des Polygons ist, wobei jeder der Nadelpunktangüsse mit einer der Seitenflächen zugeordnet ist, und
die Harzzufuhr von den Nadelpunktangüssen (20) verteilt wird, so daß es an Punkten in die Form fließt, die in gleicher Weise den jeweiligen Mittelpunkten der Längen der Seitenflächen entsprechen, wodurch jede Strömung auf ihre beiden benachbarten Strömungen trifft, und zwar entlang Grenzlinien die durch die Verbindungsstellen zwischen der zugehörigen Seitenfläche und ihrer beiden benachbarten Seitenflächen verlaufen.

2. Verfahren nach Anspruch 1, dadurch gekennzeichnet, daß der Schritt der Bildung einer Spiegelfläche (11) das Beschichten der Seitenflächen mit Metall umfaßt.

3. Verfahren nach Anspruch 2, dadurch gekennzeichnet, daß der Schritt der Bildung einer Spiegelfläche weiterhin die Bildung einer Schutzschicht über der Metallschicht umfaßt.

4. Verfahren nach einem der Ansprüche 1 bis 3, dadurch gekennzeichnet, daß der Schritt der Harzzufuhr in die Form Einspritzen des Harzes unter Druck durch die Einlaßvorrichtung umfaßt.

5. Verfahren nach einem der Ansprüche 1 bis 4, dadurch gekennzeichnet, daß es sich bei dem Polygonkörper (13, 14, 15) um einen achteckigen Körper handelt.

## Revendications

1. Procédé de fabrication d'un miroir polygonal, comportant:
le moulage par injection d'un corps polygonal (13, 14, 15) en alimentant un moule avec une résine par des moyens d'entrée (20); et
la formation d'une surface réfléchissante (11) sur chacune des faces latérales de la surface périphérique du corps polygonal moulé;
caractérisé en ce que:
ledit moule est alimenté avec ladite résine par undit moyen d'entrée comportant une entrée se ramifiant en une pluralité d'injections capillaires (20) en nombre égal au nombre desdites faces latérales du polygone, chacune desdites injections capillaires étant associée à l'une desdites faces latérales; et
ladite alimentation en résine est distribuée par lesdites injections capillaires (20) de manière à s'écouler dans ledit moule en des points correspondant de manière similaire avec les centres respectifs des longueurs desdites faces latérales, de sorte que chacun desdits écoulements rejoigne ses deux écoulements adjacents le long de lignes de délimitation passant par les jonctions entre la face latérale associée et sesdites deux faces latérales adjacentes.

2. Procédé selon la revendication 1, caractérisé en ce que ladite étape consistant à former une surface réfléchissante (11) comporte le revêtement desdites faces latérales avec du métal.

3. Procédé selon la revendication 2, caractérisé en ce que ladite étape consistant à former une surface réfléchissante comporte en outre la formation d'une couche protectrice par-dessus ledit revêtement métallique.

4. Procédé selon l'une quelconque des revendications 1 à 3, caractérisé en ce que ladite étape consistant à alimenter le moule avec la résine comporte l'injection sous pression de ladite résine à travers lesdits moyens d'entrée.

5. Procédé selon l'une quelconque des revendications 1 à 4, caractérisé en ce que ledit corps polygonal (13, 14, 15) est un corps octogonal.
